# EUROPEAN PATENT SPECIFICATION

(11) **EP 4 675 975 B1**
(45) Date of publication and mention of the grant of the patent: **01.07.2026**
(21) Application number: 24186848.8
(22) Date of filing: 05.07.2024
(51) Int. Cl.: H04L 9/40, H04K 3/00, H04W 12/122

(54) **APPARATUS AND METHOD FOR NEUTRALIZATION OF A CONNECTION IN A TELECOMMUNICATION NETWORK**
VORRICHTUNG UND VERFAHREN ZUR NEUTRALISIERUNG EINER VERBINDUNG IN EINEM TELEKOMMUNIKATIONSNETZWERK
APPAREIL ET PROCÉDÉ POUR LA NEUTRALISATION D'UNE CONNEXION DANS UN RÉSEAU DE TÉLÉCOMMUNICATION

(43) Date of publication of application: 07.01.2026
(73) Proprietor: Dirac AG, 8044 Zürich (CH)
(72) Inventor: Baker, Richard, Oxford, OX1 2DF (GB); Erni, Simon, 6405 Immensee (CH); Kotuliak, Martin, 8064 Zürich (CH)
(74) Representative: Cohausz & Florack

(56) References cited:
- US-A1- 2016 124 071
- US-A1- 2021 185 537
- US-B1- 10 848 965
- SIMON ERNI ET AL: "AdaptOver : Adaptive Overshadowing of LTE signals", ARXIV.ORG, CORNELL UNIVERSITY LIBRARY, 201 OLIN LIBRARY CORNELL UNIVERSITY ITHACA, NY 14853, 9 June 2021 (2021-06-09), XP081987128

## Description

The present invention relates to an apparatus and a method for neutralization of a connection in a telecommunication network.

It is known to manage a radio access network in cellular networks with at least one base station, wherein the at least one base station routes a traffic over a secure channel to a network core, which handles most mobile network functions. Generally, management of the connection on both low and high layers of a protocol is done over control channels, whilst user data is transmitted over data channels. A connection of a mobile station or user equipment may start with a Random-Access procedure, followed by connection establishment using data exchanged on the control channels. Finally, after the connection is established, the mobile station or user equipment transmits user data over pre-allocated data channels.

For some applications, it may be desirable to restrict or even prevent communication of data over a telecommunication network. In particular, it may be desirable to prevent a communication connection between a user equipment located within a predetermined area and a base station. This may be a prerequisite for an area with high safety requirement such as military zones, government buildings or prisons.

A system consisting of multiple jammers which transmit a pre-generated signal is already known. The pre-generated signal is often simple, resulting in a requirement for high ratio of the signal strength of the pre-generated signal (J) to the signal strength of a target return signal (S), or J/S ratio. Hereby, a bounding of the jamming to a specific area is achieved by fine tuning transmitter power of the system, such that it does not leak outside of the bounded area, which is a technical and physical challenge. Due to these constraints, such known systems operate on downlink connections or connection from a base station to a user equipment but can hardly be used for uplink connections or connections from a user equipment towards the base station, in particular because on the uplink they would impact all users located in the vicinity of the base station. Further, fine tuning of the transmitters' power is often imprecise, resulting in white spots inside the pre-defined bounded area, or impact on mobile stations or user equipment outside of the area. If the base station is close to the area and transmitting with high power, it is difficult to achieve strong enough jamming signal while complying with health constraints of the local state laws concerned.

Another known approach is to use so called Fake Base Stations (FBS). Fake base stations pretend to be real base stations but transmitting with higher power, aiming the mobile stations or user equipment to choose them as primary connecting cells. The FBS will run a protocol attack, e.g. a Service/Attach Reject attack upon a new connection. Even though this technique is relatively efficient in terms of J/S ratio, it still suffers from the imprecise area bounding based on transmitter signal strength. Another disadvantage is that an FBS needs to constantly transmit broadcast messages similarly to a real base station.

If is further known from US 2016/0124071 A1 that systems and methods can support coprocessing radio signals and video to identify and locate a radio transmitter. Positions and orientations for cameras and RF sensors may be maintained. An RF signature associated with the radio transmitter may be received from the RF sensors to determine an RF persona. A first physical location for the radio transmitter may be estimated according to a physical radio propagation model operating on RF signals. A video stream from one or more of the cameras may be received. An individual may be identified in the video stream using computer vision techniques. A second physical location for the radio transmitter may be estimated from the video stream. Relationships may he established between the first physical location and the second physical location and between the RF persona and the identified individual. The relationships may be presented to an operator interface.

Against this background, it is an object of the present invention to provide an apparatus and a method to thwart outgoing and incoming cellular communications containing user data from a predefined area.

The object named above is solved in accordance with the present invention by an apparatus for neutralization of a connection in a telecommunication network, the apparatus comprising means for: receiving a signal from at least one node of the telecommunication network, measuring signal characteristics of the received signal, assessing an admissibility based on the measured signal characteristics, and, if the admissibility is negative, then transmitting a neutralization injection attack for neutralizing a communication connection with the at least one node in the telecommunication network.

The object named above is further solved in accordance with the present invention by a method for neutralization of a connection in a telecommunication network, the method comprising: receiving a signal from at least one node of the telecommunication network, measuring signal characteristics of the received signal, assessing an admissibility based on the measured signal characteristics, and, if the admissibility is negative, then transmitting a neutralization injection attack for neutralizing a communication connection with the at least one node in the telecommunication network.

The apparatus and the method disclosed therein allow for both whitelisting and blacklisting user equipment. Thus, communication connections with user equipment located within a predetermined area, and / or communication connections with user equipment located outside a predetermined area may be monitored and attacked, e.g. neutralized accordingly.

**In** particular, assessing an admissibility allows for either whitelisting, blacklisting, or both. Assessing the admissibility may comprise applying complex functions that can use signal measurements, data from the messages and inferences drawn from both, in order to make a decision on the admissibility. Alternatively or additionally, the assessing the admissibility can be performed in addition to a blacklisting. Then, a blacklist and / or whitelist can overrule a location-based admissibility as described in the following.

Further, the apparatus and the method disclosed therein allow for a neutralization within the network with little chance of disturbance to the network. In the meantime, the proposed solution allows for a stealthy man-in-the middle attack, which, in contrast to e.g. a broadband jamming technique or fake base station, is relatively harder to detect. The disclosed apparatus and method requires relatively little signal power. In particular when performing an attack of an uplink connection, the proposed solution requires in the worst-case transmissions synchronized to the attacked connection's allocated uplink transmission time and frequency, thus allowing for significant improvements both in terms of output power and required transmission duration in comparison to the known techniques. Further, fine-grained area bounding can be achieved, while both a neutralization with uplink transmissions or with downlink transmissions.

The apparatus and the method according to the present disclosure allow for neutralizing connections with mobile stations or user equipment in the control channel or in the data channel before the mobile station or user equipment transmits any user data. In particular, user data may be overshadowed by a neutralization node of the apparatus. In the meantime, connections with mobile stations or user equipment outside of an area determined as inadmissible may not be impacted. This may be achieved by operating the apparatus or performing the method individually for single connections, in order to filter connections individually as admissible or inadmissible.

In a particular embodiment, the apparatus or method allows for first detecting a connection, then to, based on initial control channel data of the connection, classify the connection in dependence on whether the user equipment involved in the connection is identified as being located within or outside a bounded area.

A telecommunication network in the meaning of the present disclosure may be based on an already known cellular technology such as, for instance GSM, GPRS, EDGE, EGPRS, UMTS, CDMA2000, HSPA, HSPA+, LTE, LTE Advanced, WiMax, 5G New Radio, or on a following cellular technology generation, wherein this list is not limiting. In particular, the telecommunication network may be a network adapted for supporting a connection between a base station and a user equipment.

The apparatus may be provided as at least one node in the cellular network. In a particular embodiment, the apparatus may comprise at least one monitoring node and at least one neutralization node. A node may comprise a set of Software Define Radios (SDRs) operating on the typical frequency bands allocated usually to Mobile Network Operators (MNOs) by a countries National Telecoms Regulator (NTRs). The nodes may maintain tight time synchronization between each other and with base station(s) located in their vicinity. The nodes may achieve a time synchronization between each other using GNSS or other (e.g. White Rabbit, IEEE1588 Precision Time Protocol) synchronization protocols. A time synchronization between the nodes and a base station in the vicinity may be maintained by at least one monitoring node which synchronizes itself using synchronization signals and shares it with the other nodes of the apparatus. Monitoring nodes may listen on downlink or uplink (or both downlink and uplink) of cells of the telecommunication network located in the vicinity of an area defined as "bounded". Monitoring nodes can have multiple receiver ports or a diversity of antenna for better reception or Angle of Arrival measurements. Neutralization nodes may transmit on either uplink or downlink of cells in the vicinity of the bounded area.

Alternatively or additionally, the apparatus may comprise one or more elements or one or more means connected with each other via communication connections. The "means" can be realized in a single apparatus or as a system of several apparatuses, each apparatus fulfilling a function such as transmitting and / or receiving. As an example, the apparatus may comprise at least one receiver and at least one transmitter, wherein the at least receiver is configured for receiving a signal from a base station and a signal from a user equipment, and wherein the transmitter is configured for transmitting a neutralization injection attack. The at least one receiver and the at least one transmitter may be provided as a single apparatus or as distinct building parts of the apparatus. Alternatively or additionally, the at least one receiver may comprise at least one receiver for receiving a signal from the base station and at least one receiver for receiving a signal from the user equipment, wherein the at least one receiver for receiving a signal from the base station and at least one receiver for receiving a signal from the user equipment are distinct elements.

Alternatively or additionally, the means or buildings parts of the apparatus may be provided with a hierarchy. As an example, the at least one receiver for receiving a signal from a user equipment may be configured as a slave and the at least one receiver for receiving a signal from a base station may be configured as a master.

A receiver or means for receiving a signal may comprise a processor unit and a receiving unit, wherein the processor unit is configured for controlling the receiving unit. The receiving unit may be provided with an omni-directional antenna or with an antenna having a main receiving direction.

The apparatus may comprise at least one computer readable medium, wherein the at least one computer readable medium comprises a processor and a data storage with instructions for performing the method according to the present disclosure.

Receiving a signal from at least one node of the telecommunication network may comprise receiving a signal from a base station in the telecommunication network, receiving a signal from a user equipment in the telecommunication network, or both. A signal received from the base station or a signal received from the user equipment may comprise at least one of: a physical channel message or a physical layer signal. Physical channel messages may be further mapped to a transport channel message. Transport channel messages may be further mapped to a logical channel message. Logical channels may be encrypted and/or integrity protected. Messages on unencrypted channels can be decoded. Examples for unencrypted messages are: a random access message, a random access response message, an attach request message, an attach response message, a service request message, a service response message, an authentication request message, an authentication response message, a registration request message, a registration response message, an identification request message, an identification response message, wherein this list is not limiting.

In particular, a signal received from the base station may contain information about the communication connection with the user equipment. This may be the case when a random access signal has been transmitted by the user equipment to the base station, and the signal received from the base station by the apparatus described herein is a reaction to the random access.

Measuring signal characteristics of the received signal may comprise measuring physical values of the signal, e.g. a signal-to-noise ratio. Additionally or alternatively, measuring signal characteristics of the received signal may comprise decoding the signal with any one of the known decoding methods.

The neutralization injection attack may be transmitted as a signal comprising at least one of: a physical channel message or a physical layer signal. Physical channel message(s) may compromise a transport channel message. A transport channel message may compromise a logical channel message. Examples for these messages are: an attach reject message, a service reject message, an authentication reject message, a registration reject message, an identification reject message, a fake uplink connection allocation, random data, a falsified or invalid contention resolution identifier, a falsified or invalid attach request, a falsified or invalid registration request, a falsified or invalid service request, a falsified or invalid identity response, random data on physical channel, or falsified or invalid physical layer signals, wherein this list is not limiting.

Example for the signal characteristics are: physical values (such as, e.g., an angle of arrival), synchronization parameters, configuration parameters, base station parameters (such as, e.g., timing parameters, indication of frequency slot, Random Access), connection parameters (such as, e.g., timing advance command), wherein this list is not limiting. Particular examples for the signal characteristics are a Signal Strength, a Time of Arrival, a Signal to Noise Ratio, SNR, an Energy Per Resource Element, EPRE, wherein this list is not limiting.

The communication connection with the at least one node in the telecommunication network, e.g. a communication connection between a base station and a user equipment, may be an already existing or initialized connection.

Assessing an admissibility may comprise taking into account base station parameters, optionally connection parameters, wherein the base station parameters and the connection parameters are retrieved from the measured signal characteristics. **In** particular, assessing an admissibility may comprise taking into account data contained in the message(s) conveyed by the received signal, and / or signal characteristics of the received signal.

Assessing an admissibility based on the measured signal characteristics may result either in a positive admissibility or in a negative admissibility. The admissibility is negative when the user equipment is determined as being located within the boundaries of a predetermined area defined as not allowed, and / or when the user equipment is determined as being located outside the boundaries of a predetermined area defined as allowed. The admissibility is positive when the user equipment is determined as being located within the boundaries of a predetermined area defined as allowed, and / or when the user equipment is determined as being located outside the boundaries of a predetermined area defined as not allowed.

The predetermined area may be defined based on threshold for signal characteristics, which thresholds may be determined relative to means of the apparatus. As an example, a value range or extrema for an Angle of Arrival may be defined as thresholds, wherein the extrema correspond to boundaries of an allowed or not allowed area for a user equipment to transmit the signal. The predetermined area may correspond to a plain area. Alternatively, the predetermined area may correspond to an area comprising at least one sub-area. Accordingly, the area may be an allowed area and the sub-areas may be not-allowed sub-areas or vice-versa, thus defining patches of not-allowed zones within a lager allowed zone. As an example, a high security military site may be a main not-allowed area comprising allowed sub-areas such as conference rooms or communication booths. Such configuration allows for both whitelisting, i.e. allowing only selected connections or communications, and blacklisting, i.e. providing only selected connections or communications.

The admissibility preferably comprises determining if the signal received from the user equipment originates from inside the predetermined area, wherein the determination comprises an analysis of the measured signal characteristics. Such determination may be based on a classification model. Examples for such a classification model are specialized machine learning methods, in particular a machine learning method based on a neural network technology, which produce a classification model based on training observations of signal characteristics measured by the apparatus.

Various embodiments of the apparatus and the method are described in the following. The individual embodiments are in each case individually applicable to the apparatus and the method. The individual embodiments may furthermore be combined with each other at will.

An exemplary embodiment is disclosed, wherein the at least one node comprises at least one of a base station or a user equipment.

Accordingly, the neutralization of the communication connection can be realized on the basis of a signal emitted by any one of both communication partners of the communication connection, i.e. the base station or the user equipment.

The means for receiving a signal from at least one node of the telecommunication network may be configured for receiving a signal from a base station, for receiving a message of a user equipment, or for receiving a signal from a base station and a signal from a user equipment. Further, the means for measuring signal characteristics may be configured for measuring signal characteristics of a signal from a base station, for measuring signal characteristics of a signal from a user equipment, or for measuring signal characteristics of a signal from a base station and a signal from a user equipment. Furthermore, the admissibility may be assessed by taking into account the signal characteristics measured for the signal received from the base station, by taking into account the signal characteristics measured for the signal received from the user equipment, or by taking into account the signal characteristics measured for the signal received from base station and for the signal received from the user equipment.

One the one hand, an apparatus for neutralization of a connection in a telecommunication network is disclosed, the apparatus comprising means for:
- receiving a signal from a user equipment, and
- measuring signal characteristics of the signal received from the user equipment,
- assessing an admissibility based on the measured signal characteristics, and,
- if the admissibility is negative, then transmitting a neutralization injection attack for neutralizing a communication connection between a base station and the user equipment.

A method with corresponding method steps is also disclosed.

Also disclosed is an apparatus for neutralization of a connection in a telecommunication network, the apparatus comprising means for:
- receiving a signal from a base station, and
- measuring signal characteristics of the signal received from the base station,
- assessing an admissibility based on the measured signal characteristics, and,
- if the admissibility is negative, then transmitting a neutralization injection attack for neutralizing a communication connection between the base station and a user equipment.

A method with corresponding method steps is also disclosed.

Using only signal characteristics measured for the signal received from the base station may be sufficient for assessing the admissibility, in particular when these signal characteristics allow for retrieving information on the user equipment. This may be the case when the user equipment sent a connection request containing such information to the base station beforehand. Using both signal characteristics measured for the signal received from the base station and signal characteristics measured for the signal received from the user equipment may, however, be convenient for improving the precision of the admissibility test.

An exemplary embodiment is disclosed, wherein assessing an admissibility based on the measured signal characteristics comprises comparing the signal characteristics measured for the signal received from the at least one node with at least one threshold.

Accordingly, an admissibility range may be controlled easily by predetermining the threshold value. Also, this renders the admissibility test flexible, in particular when the threshold value is adjustable. As an example, the at least one threshold value may correspond to the boundaries of a predetermined area, which area is defined as admissible or inadmissible.

Further, assessing an admissibility may comprise subjecting the measured signal characteristics to post-processing and analysis. Accordingly, assessing an admissibility may use complex models.

An exemplary embodiment is disclosed, wherein the means for receiving the signal are configured for receiving a signal from a user equipment and comprise a plurality of receivers, wherein the means for measuring signal characteristics are configured for measuring signal characteristics for the signal as received from the user equipment by each receiver of the plurality of receivers, and wherein assessing an admissibility based on the measured signal characteristics comprises comparing the measured signal characteristics of the same type with each other and / or with one or multiple thresholds.

By providing a plurality of receivers, the measured characteristics can be combined, thus providing an enhanced overall measurement accuracy. As an example, when determining a signal strength of each signal emitted by a user equipment and received by the respective receivers of a plurality of receivers, a probable position of the emitting user equipment relative to the receivers can be determined. The more receivers are provided, the higher the confidence in the determined position of the user equipment.

The plurality of receivers for receiving the signal from the user equipment may comprise an omni-directional antenna and / or at least two antennas, wherein the at least two antennas have a respective main receiving direction.

Alternatively or additionally, the means for receiving the signal from a base station may comprise a directional antenna and / or an omni-directional antenna.

Antennas with a respective main receiving direction may be specifically oriented towards the user equipment for optimum receiving signal quality. Further, when providing a plurality of receivers or means for receiving a signal from the user equipment, the receivers of the plurality of receivers and their respective main receiving directions may be oriented such as covering a large area for receiving signals from user equipment dispatched therein. An omni-directional antenna may be characterized in that it is adapted for receiving a signal equally well in all spatial directions, hence allowing for providing the apparatus with a single antenna as receiving means.

An exemplary embodiment is disclosed, wherein assessing an admissibility based on the measured signal characteristics comprises estimating a confidence based on the measured signal characteristics, in particular based on a comparison of the measured signal characteristics according to the present disclosure, comparing the estimated confidence with at least one reference value, and providing either a positive admissibility result or a negative admissibility result based on the comparison of the estimated confidence with the at least one reference value.

The estimated confidence may correspond to a confidence in the measured position of the user equipment. The estimated confidence may be expressed as a probability or a degree of confidence for a determined relative position, in particular for a position relative to the apparatus or elements thereof. Estimating a confidence allows to determine an admissibility without requiring an exact localization of the user equipment, wherein the user equipment's location is determined as a function of arbitrary defined cells on a map. The present disclosure rather teaches to assess a confidence for a localization of the user equipment relative to the apparatus or relative to the at least one receiver means of the apparatus, detached from a predetermined map. **In** other words, the apparatus and method disclosed therein allow for determining an admissibility based on an area defined relatively to the apparatus itself, regardless of generally defined longitude and latitude. Accordingly, the teaching of the present disclosure is applicable in a space relative to the apparatus.

The confidence is preferably determined on the basis of measured signal characteristics such a signal strength, angle of arrival or similar. The reference value may then be a reference value for a corresponding signal characteristic, such as a signal strength or an angle or arrival. The reference value may be adapted for a combination of multiple signal characteristics, e.g. for performing a logistic regression. The reference value is preferably predetermined and stored on a data storage or processor of the apparatus.

Once a connection is classified as originating from inside the bounded area, the apparatus, in particular receiving means of the apparatus may stop gathering data for the connection and neutralization nodes or a transmitter of the apparatus may perform an injection attack. In particular, an injection attack may be performed by the apparatus or a neutralization node of the apparatus, either on a downlink or on an uplink.

Any message defined in the cellular network protocol can be crafted and injected by the apparatus or a neutralization node of the apparatus. These messages can be crafted on any protocol layer (physical, transport, logical). Moreover, the messages can be crafted outside of the protocol definition. Possible attacks that can be performed by the apparatus or by a neutralization node of the apparatus may comprise one of the following, wherein this list is not limiting:
Possible Injection Attacks on a downlink: Attach Reject, Service Reject, Authentication Reject, Registration Reject, or Location Update Reject. An injection attack on a downlink within an LTE cellular network may be an Attach Reject, a Service Reject, or an Authentication Reject. An injection attack on a downlink within a 5G cellular network may be a Service Reject, an Authentication Reject, or a Registration Reject.

Possible injection attacks on an uplink: Sending random data on dedicated uplink allocation of a given connection, Overshadowing of Contention Resolution Identifiers, injecting a crafted IMSI Detach, injecting a crafted Service Request, injecting a crafted Attach Request, injecting a crafted Location Update Request, injecting a crafted Authentication Response, injecting a crafted Registration Request, or injecting a crafted Authentication Response. Sending random data on dedicated uplink allocation of a given connection or overshadowing of Contention Resolution Identifiers may be performed on an uplink within a cellular network based on anyone of the known cellular technologies known up to now, in particular GSM, UMTS, LTE, 5G NSA, 5G SA, New Radio, or a following cellular technology generation. An injection attack on an uplink within a GSM cellular network may be an IMSI Detach. An injection attack on an uplink within an LTE cellular network may be performed by injecting a crafted Service Request, by injecting a crafted Attach Request, or by injecting a crafted Authentication Response. An injection attack on an uplink within a 5G cellular network may be performed by injecting a crafted Service Request, by injecting a crafted Registration Request, or injecting a crafted Authentication Response.

An exemplary embodiment is disclosed, wherein the means for receiving the signal from the at least one node are located in the vicinity of a predetermined area or within the predetermined area, and wherein assessing an admissibility based on the measured signal characteristics comprises taking into account boundaries of the predetermined area.

By doing so, it is possible to assess a confidence on whether a user equipment is located within the boundaries of the predetermined area and perform the connection neutralization only for connections with user equipment located within the boundaries of a predetermined area. Accordingly, communication connections between user equipment identified as being positioned within a forbidden area with a high confidence may be identified and neutralized. This may be of particular interest in the case, for instance, for preventing communication connections between a user equipment located within a prison and a base station located outside the prison.

For taking into account boundaries of the predetermined area, the at least one threshold and / or the at least one reference value may be defined based depending on boundaries of a predetermined area.

The area may correspond to the boundaries of a property right on a map, or arbitrary defined boundaries.

Additionally or alternatively, the admissibility may be assessed negative if the measured signal characteristics indicate that the user equipment is located within the boundaries of the predetermined area.

According to the invention, the communication connection with the at least one node in the telecommunication network is a communication connection between a user equipment and a base station, transmitting a neutralization injection attack comprises transmitting a signal comprising the neutralization injection attack to the base station, the signal comprising the neutralization injection attack is synchronized with at least one signal transmitted by the user equipment to the base station over the communication connection, and the neutralization injection attack is configured for lowering the quality of the at least one signal transmitted by the user equipment to the base station.

By doing so, the neutralization injection attack causes the base station to identify the signal transmitted by the user equipment as having a too low quality and to reject the signal transmitted by the user equipment. This allows for preventing decoding the signal or message transmitted from the user equipment by the base station. Alternatively, the neutralization injection attack may cause an interruption of the connection between the user equipment and the base station. Overall, the neutralization attack described here corresponds to an overshadowing of the signal transmitted by the user equipment to the base station.

In particular, the signal transmitted by the apparatus to the base station, which signal is synchronized with the signal transmitted by the user equipment, may have a higher signal strength compared to the signal transmitted by the user equipment. Accordingly, the signal transmitted by the apparatus overshadows the signal transmitted by the user equipment, and the signal quality received at the base station is lowered. Hence, the base station likely ignores or rejects the superimposed signals.

A synchronization in the meaning of the present disclosure may be realized by taking a piece of information relating to a timing from the measured signal characteristics into account. As an example, a piece of information relating to a timing may be a schedule for a frequency slot or similar. Also as an example, taking such a piece of information relating to a timing into account may be performed by starting to transmit the neutralization injection attack before the schedule determined from the measured signal characteristics and ending to transmit the neutralization injection attack after the schedule determined from the measured signal characteristics. As an alternative example, transmitting the neutralization injection attack may be provided at the same time or with a smallest possible time difference with a schedule determined from the measured signal characteristics.

As an example, lowering the quality of the at least one signal transmitted by the user equipment to the base station may be performed by transmitting, as a neutralization injection attack, a signal corresponding to noise to the base station. As a further example, lowering the quality of the at least one signal transmitted by the user equipment to the base station may be performed by transmitting, as a neutralization injection attack, a signal conveying a message diverging from the message conveyed by the at least one signal transmitted by the user equipment to the base station. In both cases, the base station receives the original signal transmitted by the user equipment and the signal bearing the neutralization injection attack as combined signals. In the former case, the combined signals exhibits lowered quality, which corresponds to the original signal altered by the noise from the neutralization injection attack; in the latter case the received combined signals contains data from the original signal altered by data of the neutralization injection attack. In either cases, the signal quality is lowered.

An exemplary embodiment is disclosed, wherein the neutralization injection attack corresponds to a trigger for the base station to reject an existing communication connection of the user equipment with the base station.

Such rejection may be triggered by receiving a signal with a lowered quality as described above, e.g. wherein the neutralization injection attack signal conveys data diverging from the data of the original signal transmitted by the user equipment to the base station.

Also with this technique, the injection attack causes the base station to emit a rejection signal and thus interrupt or prevent a connection with the user equipment.

Non limiting examples for a trigger are: falsified or invalid user data, falsified or invalid control data, falsified or invalid contention resolution identifier.

Alternatively or additionally, the neutralization injection attack may be a neutralization protocol attack.

According to the invention, the communication connection with the at least one node in the telecommunication network is a communication connection between a user equipment and a base station, transmitting a neutralization injection attack comprises transmitting a signal comprising the neutralization injection attack to the user equipment, the neutralization injection attack corresponds to a rejection message, and the rejection message mimics a rejection message that the base station would send.

Accordingly, the apparatus intervenes in the connection between the base station and the user equipment and causes the user equipment to interrupt the connection. Further features and advantages of the apparatus and the method emerge from the following description of exemplary embodiments where reference is made to the attached drawing.

### In the drawing

- Fig. 1: shows a first exemplary embodiment of a method for neutralization of a connection in a telecommunication network;
- Fig. 2: shows a second exemplary embodiment of a method for neutralization of a connection in a telecommunication network;
- Fig. 3: shows a first exemplary embodiment of a system including an apparatus for neutralization of a connection in a telecommunication network;
- Fig. 4: shows a second exemplary embodiment of a system including an apparatus for neutralization of a connection in a telecommunication network; and
- Fig. 5: shows a third exemplary embodiment of a system including an apparatus for neutralization of a connection in a telecommunication network;

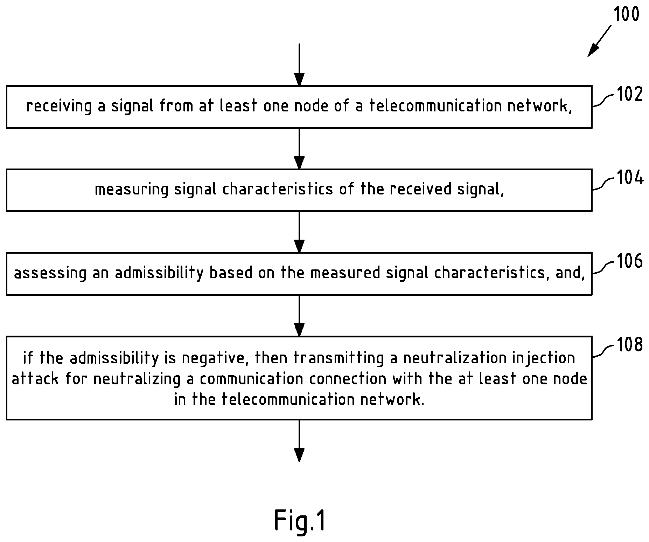

Fig. 1 shows a method 100 for neutralization of a connection in a telecommunication network, the method 100 comprising:
- receiving 102 a signal from at least one node of the telecommunication network,
- measuring 104 signal characteristics of the received signal,
- assessing 106 an admissibility based on the measured signal characteristics, and,
- if the admissibility is negative, then transmitting 108 a neutralization injection attack for neutralizing a communication connection with the at least one node in the telecommunication network,
- wherein the communication connection with the at least one node in the telecommunication network is a communication connection between a user equipment and a base station,
- wherein transmitting a neutralization injection attack comprises transmitting a signal comprising the neutralization injection attack to the base station,
- wherein the signal comprising the neutralization injection attack is synchronized with at least one signal transmitted by the user equipment to the base station over the communication connection, and
- wherein the neutralization injection attack is configured for lowering the quality of the at least one signal transmitted by the user equipment to the base station.

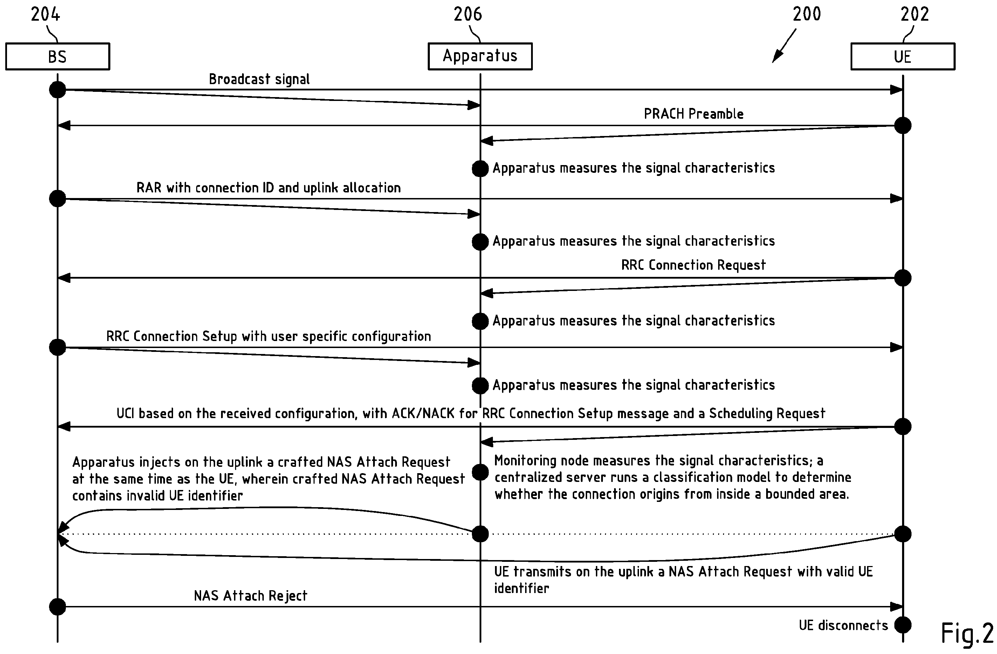

Fig. 2 shows a second exemplary embodiment of a method 200 for neutralization of a connection in a telecommunication network. A user equipment 202 or mobile station, a base station 204 and an apparatus 206 are provided. The apparatus 206 comprises at least one receiver for receiving a signal from the base station 204, at least one receiver for receiving a signal from the user equipment, a processor unit, and at least a transmitter for transmitting an injection attack. Each receiver forms a respective monitoring node, and the transmitter forms a neutralization node.

The concerned receiver or monitoring node of the apparatus 206 continuously measures the signal characteristics of the base stations which may be used by the user equipment to connect to the network. The apparatus measures the signal characteristics of all broadcast signals, and signals used for a new connection setup.

The user equipment 202 is located inside a predetermined area and aims to send a message. To do so, the user equipment 202 determines a preferred LTE base station 204 in the vicinity on the basis of a broadcast signal transmitted by the base station 204 and received at the user equipment 202. The user equipment 202 decodes the received broadcast signal and sets up protocol layers based on a configuration of the cell determined on the basis of the received signal. Then, the user equipment 202 transmits a PRACH Preamble signal according to a permitted time and frequency allocation as determined from the broadcast signal received from the base station 204 at the user equipment 202.

Then, the concerned receiver or monitoring node of the apparatus 206 receives the PRACH Preamble transmitted by the user equipment 202. Immediately after or ad-hoc, the concerned receiver or monitoring node of the apparatus 206 determines signal characteristics by measuring the received PRACH preamble signal and the processor unit performs a classification model to determine if the connection origins from inside the predetermined area.

In parallel or subsequently, the base station 204 receives the PRACH preamble signal transmitted by the user equipment 202, and as a reaction to receiving the PRACH preamble signal, transmits a Random-Access Response (RAR) signal to the user equipment 202. The Random-Access Response signal may comprise information on a connection ID, connection information (e.g., Timing Advance Command), information on at least one predetermined user specific configuration, and on a next uplink allocation.

The concerned receiver or monitoring node of the apparatus 206 receives the Random-Access Response signal transmitted by the base station 204. As a reaction, the apparatus 206 matches the PRACH Preamble signal received from the user equipment 202 with the connection ID comprised in the Random-Access Response signal received from the base station 204. Then, the receivers or monitoring nodes of the apparatus 206 prepare for uplink message reception using the uplink allocation comprised in the Random-Access Response signal received from the base station 204.

The user equipment 202 transmits a radio resource control, RRC, Connection Request signal according to the uplink allocated portion of the frequency spectrum as indicated by the Random-Access Response signal received from the base station 204.

The concerned receiver or monitoring node of the apparatus 206 receives the radio resource control, RRC, Connection Request signal transmitted by the user equipment 202 and the apparatus 206 determines signal characteristics of the received radio resource control, RRC, Connection Request signal and immediately or ad-hoc, the processor unit performs a classification model to determine if the connection origins from inside the predetermined area.

In parallel or subsequently, the base station 204 receives the radio resource control, RRC, Connection Request signal transmitted by the user equipment 202. As a reaction hereof, and as a reply to the radio resource control, RRC, Connection Request signal transmitted by the user equipment 202, the base station 204 transmits a signal comprising information on a radio resource control Connection Setup.

The concerned receiver or monitoring node of the apparatus 206 receives the signal comprising information on a radio resource control Connection Setup transmitted by the base station 204. The receivers or monitoring nodes and the neutralization node of the apparatus 206 apply the configuration.

The user equipment 202 transmits a signal comprising uplink control information, UCI, wherein the uplink control information is determined based on the user specific configuration comprised in the signal transmitted by the base station 204. The uplink control information comprise acknowledgment information or "ACK" and / or non-acknowledgement information or "NACK" for a radio resource control Connection Setup message, and/or a Scheduling Request.

The concerned receiver or monitoring node of the apparatus 206 receives the signal comprising uplink control information transmitted by the user equipment 202 and the apparatus 206 immediately or ad-hoc determines signal characteristics accordingly and the processor unit performs a classification model to determine if the connection origins from inside the predetermined area.

Subsequently or in parallel, the base station 204 transmits a signal comprising information on an uplink allocation.

The concerned receiver or monitoring node of the apparatus 206 receives the signal comprising information on an uplink allocation. At this point, the processor unit of the apparatus 206 or a centralized server performs an admissibility test based on the previous results of classification models for this connection.

On the basis of the determination whether the connection origins from inside a bounded area, the neutralization node of the apparatus 206 determines if an attack shall be performed. As an example, if it is determined that the user equipment 202 is located within the bounded area, the neutralization node of the apparatus 206 transmits a signal to the base station, wherein the signal is provided with characteristics similar to a signal that would be transmitted by the user equipment 202. In other words, the apparatus 206 or the neuralization node of the apparatus 206 injects on the uplink connection a crafted Non-access stratum, NAS, Attach Request message that is synchronized with a Non-access stratum, NAS, Attach Request message transmitted by the user equipment 202 at the uplink allocation received from the base station, wherein the Non-access stratum, NAS, Attach Request message transmitted by the neutralization node of the apparatus 206 contains an invalid identifier of the user equipment. The Non-access stratum, NAS, Attach Request message transmitted by the neutralization node of the apparatus 206 and the Non-access stratum, NAS, Attach Request message transmitted by the user equipment 202 collide and the stronger of them is decoded by the base station. As the user equipment 202 usually has a limited power resource, the apparatus 206 and its neutralization node easily overshadows the signal transmitted by the user equipment 202.

As a reaction to decoding the Non-access stratum, NAS, Attach Request message transmitted by the apparatus 206, and determining the invalid identifier of the user equipment, the base station transmits a NAS Attach Reject signal. The user equipment 202 receives the signal transmitted by the base station containing the NAS Attach Reject signal message and disconnects from the network. As a result, the user equipment 202 does not transmit user data.

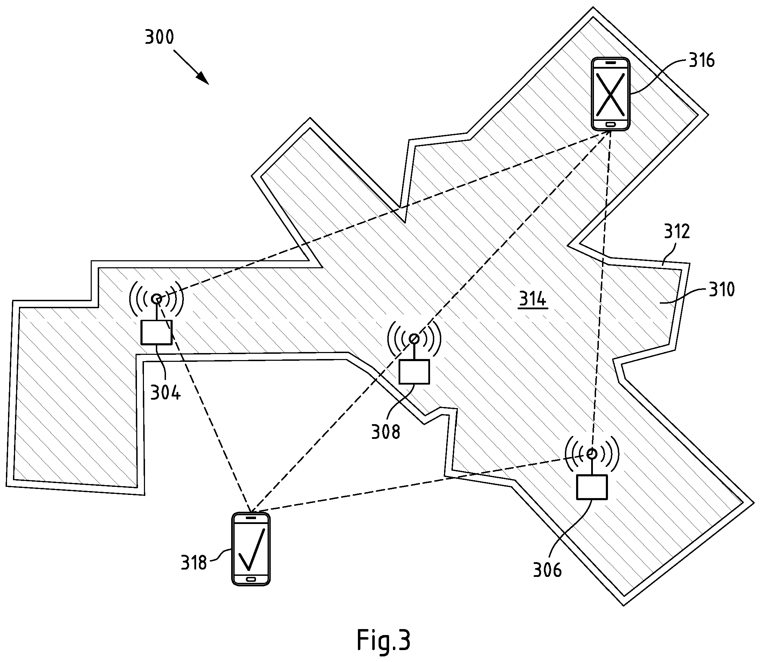

Fig. 3 shows a first exemplary embodiment of a system 300 including an apparatus 302 for neutralization of a connection in a telecommunication network. The apparatus 302 comprises a first receiver 304, a second receiver 306 and a transmitter 308. The first receiver 304 has a first position within a building 310, the second receiver 306 has a second position within the area 310 and the transmitter 308 has a third position within the area 310. The boundaries 312 of the area 310 define a bounded area 314. It is to be noted that the receivers 304, 306 and the transmitter 308 may be disposed either within the area, outside the area or both.

A first user equipment 316 in form of a smartphone is located within the building 310. A second user equipment 318 in form of a further smartphone is located outside the boundaries 312 of the building 310.

When performing a method according to the present disclosure, the apparatus 302 allows for determining a high confidence that the first user equipment 316 is located within the boundaries 312 of the building 310, and to perform an injection attack accordingly. In the meantime, when performing a method according to the present disclosure, the apparatus 302 allows for determining with a high confidence that the second user equipment 318 is located outside the boundaries 312 of the building 310 and do not perform an injection attack.

As an example embodiment for using the apparatus 302 as shown in fig. 3, the apparatus 302 is configured for detecting signal on downlink connections of cells of the cellular network in the vicinity of the location of the apparatus 302, in order to detect new connections. After a user equipment transmits a random-access message to a preferred base station (not shown), the preferred base station replies back with a response to that message. The receiver of the apparatus 302 that is configured for receiving signal from a base station "listens" for such random-access response messages. In the event a random-access response message is received at the apparatus 302, the apparatus 302 registers a new connection attempt. Usually, a Random-access response message contains a connection identifier for the newly connecting user equipment.

The base station allocates uplink transmission time and channel to each user equipment individually. Determining a connection identifier from the received Random access response message at the apparatus 302 allows for determining, in turn, user equipment's allocations on the uplink. The apparatus 302 is configured to listen, according to the determined allocations for uplink messages. **In** the event a signal is detected in the uplink allocations, the apparatus 302 measures multiple signal characteristics of the uplink signal on each monitoring node or device or receiver, said signal characteristics including Signal Strength, Time of Arrival, SNR, EPRE, etc. These measurements originating from a plurality of receivers or monitoring nodes of the apparatus 302 are collected in a dedicated server, where they are processed using classification models.

These classification models or methods range from general Time Difference of Arrival, TDoA, model that is based on time of arrival difference at different monitoring nodes to specialized machine learning methods. An example for such machine learning methods bases on a neural network technology.

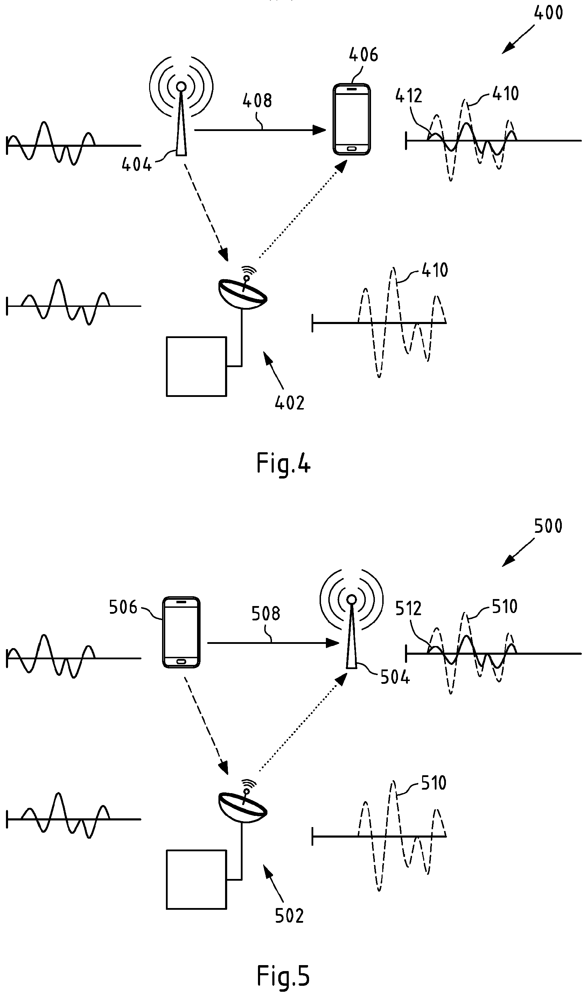

Fig. 4 shows a second exemplary embodiment of a system 400 including an apparatus 402 for neutralization of a connection in a telecommunication network. The system 400 is provided with a base station 404, a user equipment 406, and an apparatus 402 according to the present disclosure. After the apparatus 402 assessed a negative admissibility for the user equipment 406 based on measured signal characteristics of a signal received by the apparatus connection parameters or received control messages from the base station 404 and based on signal characteristics measured for a signal received by the apparatus 402 from the user equipment 406, the apparatus 402 performs an injection attack.

Fig. 4 shows a neutralization action performed by the apparatus 402 on a downlink 408 between the base station 404 and the user equipment 406 in a schematic view. While performing neutralization action, the apparatus 402 transmits a signal 410 according to a configuration for the downlink 408 as specified by the base station 404, wherein the signal 410 comprises a crafted message. The transmission of the signal 410 comprising the crafted message by the apparatus 402 is synchronized with a transmission of a signal 412 with an original message by the base station 404 on the downlink 408. The crafted message corresponds to a rejection message that mimics a rejection message that the base station 404 would send.

The user equipment 406 receives both the signal 412 with the original message transmitted by the base station 404 and the signal 410 with the crafted message transmitted by the apparatus 402. As the signal 410 with the crafted message has been configured by the apparatus according to the configuration for the downlink 408 as specified by the base station 404, the user equipment 406 analyses both received signals as combined signal, wherein the signal 410 with the crafted message and the signal 412 with the original message superimpose. When decoding the combined signal or message, the user equipment 406 decodes the stronger message, which in this case is the one injected by the apparatus 402 and, as a reaction disconnects with the base station 404 without transmitting user data.

Fig. 5 shows a third exemplary embodiment of a system 500 including an apparatus 502 for neutralization of a connection in a telecommunication network. The system 500 is provided with a base station 504, a user equipment 506, and an apparatus 502 according to the present disclosure. After the apparatus 502 assessed a negative admissibility for the user equipment 506 based on connection parameters or control messages determined for a signal received from the base station 504 and based on measured signal characteristics measured for a signal received by the apparatus 502 from the user equipment 506, the apparatus 502 performs an injection attack.

Fig. 5 shows a neutralization action performed by the apparatus 502 on an uplink 508 between the base station 504 and the user equipment 506 in a schematic view. While performing neutralization action, the apparatus 502 transmits a signal 510 according to a configuration for the uplink 508 as specified by the base station 504, wherein the signal 510 comprises a crafted message. The transmission of the signal 510 comprising the crafted message by the apparatus 502 is synchronized with a transmission of a signal 512 with an original message by the user equipment 506 on the uplink 508. The crafted message corresponds to a trigger for the base station 504 to reject the connection 508 with the user equipment 506. As an example, the trigger comprises a falsified or invalid identifier of the user equipment 506.

The base station 504 receives both the signal 512 with the original message transmitted by the user equipment 506 and the signal 510 with the crafted message transmitted by the apparatus 502. As the signal 510 with the crafted message has been configured by the user equipment 506 according to the configuration for the uplink 508 as specified by the base station 504, the base station 504 analyses both received signals as combined signal, wherein the signal 510 with the crafted message and the signal 512 with the original message superimpose. When decoding the combined signal or message, the stronger signal is decoded, in this case being the one transmitted by the apparatus 502, the base station 504 determines the trigger and, as a reaction, transmits a signal with a rejection message. The rejection message is decoded at the user equipment 506, and the user equipment 506 disconnects.

## Claims

1. Apparatus (206, 302, 402, 502) for neutralization of a connection in a telecommunication network, the apparatus (206, 302, 402, 502) comprising means for:
- receiving a signal from at least one node (204, 404, 504, 202, 316, 318, 406, 506) of the telecommunication network,
- measuring signal characteristics of the received signal,
- assessing an admissibility based on the measured signal characteristics, and,
- if the admissibility is negative, then transmitting a neutralization injection attack for neutralizing a communication connection with the at least one node (204, 404, 504, 202, 316, 318, 406, 506) in the telecommunication network,
- wherein the communication connection with the at least one node (204, 404, 504, 202, 316, 318, 406, 506) in the telecommunication network is a communication connection between a user equipment (202, 316, 318, 406, 506) and a base station (204, 404, 504),
- wherein transmitting a neutralization injection attack comprises transmitting a signal comprising the neutralization injection attack to the base station (204, 404, 504),
- wherein the signal comprising the neutralization injection attack is synchronized with at least one signal transmitted by the user equipment (202, 316, 318, 406, 506) to the base station (204, 404, 504) over the communication connection, and
- wherein the neutralization injection attack is configured for lowering the quality of the at least one signal transmitted by the user equipment (202, 316, 318, 406, 506) to the base station (204, 404, 504).

2. Apparatus (206, 302, 402, 502) according to claim 1,
wherein the at least one node comprises at least one of a base station (204, 404, 504) or a user equipment (202, 316, 318, 406, 506).

3. Apparatus (206, 302, 402, 502) according to any one of the preceding claims,
wherein assessing an admissibility based on the measured signal characteristics comprises comparing the signal characteristics measured for the signal received from the at least one node (204, 404, 504, 202, 316, 318, 406, 506) with at least one threshold.

4. Apparatus (206, 302, 402, 502) according to any one of the preceding claims,
- wherein the means for receiving the signal are configured for receiving a signal from a user equipment (202, 316, 318, 406, 506) and comprise a plurality of receivers,
- wherein the means for measuring signal characteristics are configured for measuring signal characteristics for the signal as received from the user equipment (202, 316, 318, 406, 506) by each receiver of the plurality of receivers, and
- wherein assessing an admissibility based on the measured signal characteristics comprises comparing the measured signal characteristics of the same type with each other and / or with one or multiple thresholds.

5. Apparatus (206, 302, 402, 502) according to any one of the preceding claims,
- wherein assessing an admissibility based on the measured signal characteristics comprises
- estimating a confidence based on the measured signal characteristics, in particular based on a comparison of the measured signal characteristics according to claim 3 or claim 4,
- comparing the estimated confidence with at least one reference value, and
- providing either a positive admissibility result or a negative admissibility result based on the comparison of the estimated confidence with the at least one reference value.

6. Apparatus (206, 302, 402, 502) according to any one of the preceding claims,
- wherein the means for receiving the signal from the at least one node (204, 404, 504, 202, 316, 318, 406, 506) are located in the vicinity of a predetermined area (314) or within the predetermined area (314), and
- wherein assessing an admissibility based on the measured signal characteristics comprises taking into account boundaries (312) of the predetermined area (314).

7. Apparatus (206, 302, 402, 502) according to any one of the preceding claims,
wherein the neutralization injection attack corresponds to a trigger for the base station (204, 404, 504) to reject an existing communication connection of the user equipment (202, 316, 318, 406, 506) with the base station (204, 404, 504).

8. Apparatus (206, 302, 402, 502) according to any one of the preceding claims,
- wherein the communication connection with the at least one node (204, 404, 504, 202, 316, 318, 406, 506) in the telecommunication network is a communication connection between a user equipment (202, 316, 318, 406, 506) and a base station (204, 404, 504),
- wherein transmitting a neutralization injection attack comprises transmitting a signal comprising the neutralization injection attack to the user equipment (202, 316, 318, 406, 506),
- wherein the neutralization injection attack corresponds to a rejection message, and
- wherein the rejection message mimics a rejection message that the base station (204, 404, 504) would send.

9. Method (100, 200) for neutralization of a connection in a telecommunication network, the method comprising:
- receiving a signal from at least one node (204, 404, 504, 202, 316, 318, 406, 506) of the telecommunication network,
- measuring signal characteristics of the received signal,
- assessing an admissibility based on the measured signal characteristics, and,
- if the admissibility is negative, then transmitting a neutralization injection attack for neutralizing a communication connection with the at least one node (204, 404, 504, 202, 316, 318, 406, 506) in the telecommunication network,
- wherein the communication connection with the at least one node (204, 404, 504, 202, 316, 318, 406, 506) in the telecommunication network is a communication connection between a user equipment (202, 316, 318, 406, 506) and a base station (204, 404, 504),
- wherein transmitting a neutralization injection attack comprises transmitting a signal comprising the neutralization injection attack to the base station (204, 404, 504),
- wherein the signal comprising the neutralization injection attack is synchronized with at least one signal transmitted by the user equipment (202, 316, 318, 406, 506) to the base station (204, 404, 504) over the communication connection, and
- wherein the neutralization injection attack is configured for lowering the quality of the at least one signal transmitted by the user equipment (202, 316, 318, 406, 506) to the base station (204, 404, 504).

10. Method (100, 200) according to the preceding claim,
wherein the at least one node comprises at least one of a base station (204, 404, 504) or a user equipment (202, 316, 318, 406, 506).

11. Method (100, 200) according to claim 9 or 10,
wherein assessing an admissibility based on the measured signal characteristics comprises comparing the signal characteristics measured for the signal received from the at least one node (204, 404, 504, 202, 316, 318, 406, 506) with at least one threshold.

12. Method (100, 200) according to any one of claims 9 to 11,
- wherein receiving a signal from at least one node (204, 404, 504, 202, 316, 318, 406, 506) of the telecommunication network comprises receiving a signal from a user equipment (202, 316, 318, 406, 506) by a plurality of receivers,
- wherein measuring signal characteristics comprises measuring signal characteristics for the signal as received from the user equipment (202, 316, 318, 406, 506) by each receiver of the plurality of receivers, and
- wherein assessing an admissibility based on the measured signal characteristics comprises comparing the measured signal characteristics of the same type with each other and / or with one or multiple thresholds.

13. Method (100, 200) according to any one of claims 9 to 12,
- wherein assessing an admissibility based on the measured signal characteristics comprises
- estimating a confidence based on the measured signal characteristics, in particular based on a comparison of the measured signal characteristics according to claim 12 or claim 13,
- comparing the estimated confidence with at least one reference value and
- providing either a positive admissibility result or a negative admissibility result based on the comparison of the estimated confidence with the at least one reference value.

14. Method (100, 200) according to any one of claims 9 to 13,
- wherein the signal from the at least one node (204, 404, 504, 202, 316, 318, 406, 506) is received in the vicinity of a predetermined area (314) or within the predetermined area (314), and
- wherein assessing an admissibility based on the measured signal characteristics comprises taking into account boundaries (312) of the predetermined area (314).

15. Method (100, 200) according to any one of claims 9 to 14,
wherein the neutralization injection attack corresponds to a trigger for the base station (204, 404, 504) to reject an existing communication connection of the user equipment (202, 316, 318, 406, 506) with the base station (204, 404, 504).

16. Method (100, 200) according to any one of claims 9 to 15,
- wherein the communication connection with the at least one node (204, 404, 504, 202, 316, 318, 406, 506) in the telecommunication network is a communication connection between a user equipment (202, 316, 318, 406, 506) and a base station (204, 404, 504),
- wherein transmitting a neutralization injection attack comprises transmitting a signal comprising the neutralization injection attack to the user equipment (202, 316, 318, 406, 506),
- wherein the neutralization injection attack corresponds to a rejection message, and
- wherein the rejection message mimics a rejection message that the base station (204, 404, 504) would send.

## Patentansprüche

1. Vorrichtung (206, 302, 402, 502) zur Neutralisierung einer Verbindung in einem Telekommunikationsnetz, wobei die Vorrichtung (206, 302, 402, 502) Mittel umfasst zum:
- Empfangen eines Signals von mindestens einem Knoten (204, 404, 504, 202, 316, 318, 406, 506) des Telekommunikationsnetzes,
- Messen von Signaleigenschaften des empfangenen Signals,
- Beurteilen einer Zulässigkeit basierend auf den gemessenen Signaleigenschaften, und,
- wenn die Zulässigkeit negativ ist, dann Übertragen eines Neutralisierungs-Injektionsangriffs zur Neutralisierung einer Kommunikationsverbindung mit dem mindestens einen Knoten (204, 404, 504, 202, 316, 318, 406, 506) im Telekommunikationsnetz,
- wobei die Kommunikationsverbindung mit dem mindestens einen Knoten (204, 404, 504, 202, 316, 318, 406, 506) im Telekommunikationsnetz eine Kommunikationsverbindung zwischen einem Nutzergerät (202, 316, 318, 406, 506) und einer Basisstation (204, 404, 504) ist,
- wobei das Übertragen eines Neutralisierungs-Injektionsangriffs das Übertragen eines den Neutralisierungs-Injektionsangriff umfassenden Signals zur Basisstation (204, 404, 504) umfasst,
- wobei das den Neutralisierungs-Injektionsangriff umfassende Signal mit mindestens einem Signal synchronisiert ist, das von dem Nutzergerät (202, 316, 318, 406, 506) über die Kommunikationsverbindung zur Basisstation (204, 404, 504) übertragen wird, und
- wobei der Neutralisierungs-Injektionsangriff dazu eingerichtet ist, die Qualität des mindestens einen von dem Nutzergerät (202, 316, 318, 406, 506) zur Basisstation (204, 404, 504) übertragenen Signals zu verringern.

2. Vorrichtung (206, 302, 402, 502) nach Anspruch 1,
wobei der mindestens eine Knoten mindestens eine Basisstation (204, 404, 504) oder ein Nutzergerät (202, 316, 318, 406, 506) umfasst.

3. Vorrichtung (206, 302, 402, 502) nach einem der vorstehenden Ansprüche, wobei das Beurteilen einer Zulässigkeit basierend auf den gemessenen Signaleigenschaften das Vergleichen der für das vom mindestens einen Knoten (204, 404, 504, 202, 316, 318, 406, 506) empfangene Signal gemessenen Signaleigenschaften mit mindestens einem Schwellenwert umfasst.

4. Vorrichtung (206, 302, 402, 502) nach einem der vorstehenden Ansprüche,
- wobei die Mittel zum Empfangen des Signals dazu eingerichtet sind, ein Signal von einem Nutzergerät (202, 316, 318, 406, 506) zu empfangen, und eine Mehrzahl von Empfängern umfassen,
- wobei die Mittel zum Messen von Signaleigenschaften dazu eingerichtet sind, Signaleigenschaften für das von dem Nutzergerät (202, 316, 318, 406, 506) von jedem Empfänger der Mehrzahl von Empfängern empfangene Signal zu messen, und
- wobei das Beurteilen einer Zulässigkeit basierend auf den gemessenen Signaleigenschaften das Vergleichen der gemessenen Signaleigenschaften desselben Typs miteinander und/oder mit einem oder mehreren Schwellenwerten umfasst.

5. Vorrichtung (206, 302, 402, 502) nach einem der vorstehenden Ansprüche,
- wobei das Beurteilen einer Zulässigkeit basierend auf den gemessenen Signaleigenschaften umfasst
- Schätzen einer Konfidenz basierend auf den gemessenen Signaleigenschaften, insbesondere basierend auf einem Vergleich der gemessenen Signaleigenschaften nach Anspruch 3 oder Anspruch 4,
- Vergleichen der geschätzten Konfidenz mit mindestens einem Referenzwert, und
- Bereitstellen eines positiven Zulässigkeitsergebnisses oder eines negativen Zulässigkeitsergebnisses basierend auf dem Vergleich der geschätzten Konfidenz mit dem mindestens einen Referenzwert.

6. Vorrichtung (206, 302, 402, 502) nach einem der vorstehenden Ansprüche,
- wobei die Mittel zum Empfangen des Signals von dem mindestens einen Knoten (204, 404, 504, 202, 316, 318, 406, 506) in der Nähe eines vorbestimmten Bereichs (314) oder innerhalb des vorbestimmten Bereichs (314) angeordnet sind, und
- wobei das Beurteilen einer Zulässigkeit basierend auf den gemessenen Signaleigenschaften das Berücksichtigen von Grenzen (312) des vorbestimmten Bereichs (314) umfasst.

7. Vorrichtung (206, 302, 402, 502) nach einem der vorstehenden Ansprüche, wobei der Neutralisierungs-Injektionsangriff einem Auslöser für die Basisstation (204, 404, 504) entspricht, eine bestehende Kommunikationsverbindung des Nutzergeräts (202, 316, 318, 406, 506) mit der Basisstation (204, 404, 504) abzulehnen.

8. Vorrichtung (206, 302, 402, 502) nach einem der vorstehenden Ansprüche,
- wobei die Kommunikationsverbindung mit dem mindestens einen Knoten (204, 404, 504, 202, 316, 318, 406, 506) im Telekommunikationsnetz eine Kommunikationsverbindung zwischen einem Nutzergerät (202, 316, 318, 406, 506) und einer Basisstation (204, 404, 504) ist,
- wobei das Übertragen eines Neutralisierungs-Injektionsangriffs das Übertragen eines den Neutralisierungs-Injektionsangriff umfassenden Signals an das Nutzergerät (202, 316, 318, 406, 506) umfasst,
- wobei der Neutralisierungs-Injektionsangriff einer Ablehnungsnachricht entspricht, und
- wobei die Ablehnungsnachricht eine Ablehnungsnachricht nachahmt, die die Basisstation (204, 404, 504) senden würde.

9. Verfahren (100, 200) zur Neutralisierung einer Verbindung in einem Telekommunikationsnetz, wobei das Verfahren umfasst:
- Empfangen eines Signals von mindestens einem Knoten (204, 404, 504, 202, 316, 318, 406, 506) des Telekommunikationsnetzes,
- Messen von Signaleigenschaften des empfangenen Signals,
- Beurteilen einer Zulässigkeit basierend auf den gemessenen Signaleigenschaften, und,
- wenn die Zulässigkeit negativ ist, dann Übertragen eines Neutralisierungs-Injektionsangriffs zur Neutralisierung einer Kommunikationsverbindung mit dem mindestens einen Knoten (204, 404, 504, 202, 316, 318, 406, 506) im Telekommunikationsnetz,
- wobei die Kommunikationsverbindung mit dem mindestens einen Knoten (204, 404, 504, 202, 316, 318, 406, 506) im Telekommunikationsnetz eine Kommunikationsverbindung zwischen einem Nutzergerät (202, 316, 318, 406, 506) und einer Basisstation (204, 404, 504) ist,
- wobei das Übertragen eines Neutralisierungs-Injektionsangriffs das Übertragen eines den Neutralisierungs-Injektionsangriff umfassenden Signals zur Basisstation (204, 404, 504) umfasst,
- wobei das den Neutralisierungs-Injektionsangriff umfassende Signal mit mindestens einem Signal synchronisiert ist, das von dem Nutzergerät (202, 316, 318, 406, 506) über die Kommunikationsverbindung zur Basisstation (204, 404, 504) übertragen wird, und
- wobei der Neutralisierungs-Injektionsangriff dazu eingerichtet ist, die Qualität des mindestens einen von dem Nutzergerät (202, 316, 318, 406, 506) zur Basisstation (204, 404, 504) übertragenen Signals zu verringern.

10. Verfahren (100, 200) nach dem vorstehenden Anspruch,
wobei der mindestens eine Knoten mindestens eine Basisstation (204, 404, 504) oder ein Nutzergerät (202, 316, 318, 406, 506) umfasst.

11. Verfahren (100, 200) nach Anspruch 9 oder 10,
wobei das Beurteilen einer Zulässigkeit basierend auf den gemessenen Signaleigenschaften das Vergleichen der für das vom mindestens einen Knoten (204, 404, 504, 202, 316, 318, 406, 506) empfangene Signal gemessenen Signaleigenschaften mit mindestens einem Schwellenwert umfasst.

12. Verfahren (100, 200) nach einem der Ansprüche 9 bis 11,
- wobei das Empfangen eines Signals von mindestens einem Knoten (204, 404, 504, 202, 316, 318, 406, 506) des Telekommunikationsnetzes das Empfangen eines Signals von einem Nutzergerät (202, 316, 318, 406, 506) durch eine Mehrzahl von Empfängern umfasst,
- wobei das Messen von Signaleigenschaften das Messen von Signaleigenschaften für das von dem Nutzergerät (202, 316, 318, 406, 506) von jedem Empfänger der Mehrzahl von Empfängern empfangene Signal umfasst, und
- wobei das Beurteilen einer Zulässigkeit basierend auf den gemessenen Signaleigenschaften das Vergleichen der gemessenen Signaleigenschaften desselben Typs miteinander und / oder mit einem oder mehreren Schwellenwerten umfasst.

13. Verfahren (100, 200) nach einem der Ansprüche 9 bis 12,
- wobei das Beurteilen einer Zulässigkeit basierend auf den gemessenen Signaleigenschaften umfasst
- Schätzen einer Konfidenz basierend auf den gemessenen Signaleigenschaften, insbesondere basierend auf einem Vergleich der gemessenen Signaleigenschaften nach Anspruch 12 oder Anspruch 13,
- Vergleichen der geschätzten Konfidenz mit mindestens einem Referenzwert und
- Bereitstellen eines positiven Zulässigkeitsergebnisses oder eines negativen Zulässigkeitsergebnisses basierend auf dem Vergleich der geschätzten Konfidenz mit dem mindestens einen Referenzwert.

14. Verfahren (100, 200) nach einem der Ansprüche 9 bis 13,
- wobei das Signal von dem mindestens einen Knoten (204, 404, 504, 202, 316, 318, 406, 506) in der Nähe eines vorbestimmten Bereichs (314) oder innerhalb des vorbestimmten Bereichs (314) empfangen wird, und
- wobei das Beurteilen einer Zulässigkeit basierend auf den gemessenen Signaleigenschaften das Berücksichtigen von Grenzen (312) des vorbestimmten Bereichs (314) umfasst.

15. Verfahren (100, 200) nach einem der Ansprüche 9 bis 14,
wobei der Neutralisierungs-Injektionsangriff einem Auslöser für die Basisstation (204, 404, 504) entspricht, eine bestehende Kommunikationsverbindung des Nutzergeräts (202, 316, 318, 406, 506) mit der Basisstation (204, 404, 504) abzulehnen.

16. Verfahren (100, 200) nach einem der Ansprüche 9 bis 15,
- wobei die Kommunikationsverbindung mit dem mindestens einen Knoten (204, 404, 504, 202, 316, 318, 406, 506) im Telekommunikationsnetz eine Kommunikationsverbindung zwischen einem Nutzergerät (202, 316, 318, 406, 506) und einer Basisstation (204, 404, 504) ist,
- wobei das Übertragen eines Neutralisierungs-Injektionsangriffs das Übertragen eines den Neutralisierungs-Injektionsangriff umfassenden Signals an das Nutzergerät (202, 316, 318, 406, 506) umfasst,
- wobei der Neutralisierungs-Injektionsangriff einer Ablehnungsnachricht entspricht, und
- wobei die Ablehnungsnachricht eine Ablehnungsnachricht nachahmt, die die Basisstation (204, 404, 504) senden würde.

## Revendications

1. Dispositif (206, 302, 402, 502) pour une neutralisation d'une connexion dans un réseau de télécommunication, le dispositif (206, 302, 402, 502) comprenant des moyens pour:
- recevoir un signal d'au moins un nœud (204, 404, 504, 202, 316, 318, 406, 506) du réseau de télécommunication,
- mesurer des caractéristiques de signal du signal reçu,
- évaluer une admissibilité basée sur les caractéristiques de signal mesurées, et,
- si l'admissibilité est négative, transmettre une attaque par injection de neutralisation pour neutraliser une connexion de communication avec l'au moins un nœud (204, 404, 504, 202, 316, 318, 406, 506) dans le réseau de télécommunication,
- où la connexion de communication avec l'au moins un nœud (204, 404, 504, 202, 316, 318, 406, 506) dans le réseau de télécommunication est une connexion de communication entre un équipement utilisateur (202, 316, 318, 406, 506) et une station de base (204, 404, 504),
- où transmettre une attaque par injection de neutralisation comprend transmettre un signal comprenant l'attaque par injection de neutralisation à la station de base (204, 404, 504),
- où le signal comprenant l'attaque par injection de neutralisation est synchronisé avec au moins un signal transmis par l'équipement utilisateur (202, 316, 318, 406, 506) à la station de base (204, 404, 504) sur la connexion de communication, et
- où l'attaque par injection de neutralisation est configurée pour abaisser la qualité de l'au moins un signal transmis par l'équipement utilisateur (202, 316, 318, 406, 506) à la station de base (204, 404, 504).

2. Dispositif (206, 302, 402, 502) selon la revendication 1,
où l'un ou plusieurs nœuds comprend au moins une station de base (204, 404, 504) ou un équipement utilisateur (202, 316, 318, 406, 506).

3. Dispositif (206, 302, 402, 502) selon l'une des revendications précédentes,
où évaluer une admissibilité basée sur les caractéristiques de signal mesurées comprend comparer les caractéristiques de signal mesurées pour le signal reçu de l'un ou plusieurs nœuds (204, 404, 504, 202, 316, 318, 406, 506) avec au moins un seuil.

4. Dispositif (206, 302, 402, 502) selon l'une des revendications précédentes,
- où les moyens pour recevoir le signal sont configurés pour recevoir un signal d'un équipement utilisateur (202, 316, 318, 406, 506) et comprennent une pluralité de récepteurs,
- où les moyens pour mesurer des caractéristiques de signal sont configurés pour mesurer des caractéristiques de signal pour le signal tel que reçu de l'équipement utilisateur (202, 316, 318, 406, 506) par chaque récepteur de la pluralité de récepteurs, et
- où évaluer une admissibilité basée sur les caractéristiques de signal mesurées comprend comparer les caractéristiques de signal mesurées du même type les unes avec les autres et/ou avec un ou plusieurs seuils.

5. Dispositif (206, 302, 402, 502) selon l'une des revendications précédentes,
- où évaluer une admissibilité basée sur les caractéristiques de signal mesurées comprend
- estimer un indice de confiance basé sur les caractéristiques de signal mesurées, en particulier basé sur une comparaison des caractéristiques de signal mesurées selon la revendication 3 ou la revendication 4,
- comparer l'indice de confiance estimé avec au moins une valeur de référence, et
- fournir un résultat d'admissibilité positif ou un résultat d'admissibilité négatif basé sur la comparaison de l'indice de confiance estimé avec l'une ou plusieurs valeurs de référence.

6. Dispositif (206, 302, 402, 502) selon l'une des revendications précédentes,
- où les moyens pour recevoir le signal de l'un ou plusieurs nœuds (204, 404, 504, 202, 316, 318, 406, 506) sont situés à proximité d'une zone prédéterminée (314) ou dans la zone prédéterminée (314), et
- où évaluer une admissibilité basée sur les caractéristiques de signal mesurées comprend prendre en compte les limites (312) de la zone prédéterminée (314).

7. Dispositif (206, 302, 402, 502) selon l'une des revendications précédentes,
où l'attaque par injection de neutralisation correspond à un déclencheur pour la station de base (204, 404, 504) pour rejeter une connexion de communication existante de l'équipement utilisateur (202, 316, 318, 406, 506) avec la station de base (204, 404, 504).

8. Dispositif (206, 302, 402, 502) selon l'une des revendications précédentes,
- où la connexion de communication avec l'un ou plusieurs nœuds (204, 404, 504, 202, 316, 318, 406, 506) dans le réseau de télécommunication est une connexion de communication entre un équipement utilisateur (202, 316, 318, 406, 506) et une station de base (204, 404, 504),
- où transmettre une attaque par injection de neutralisation comprend transmettre un signal comprenant l'attaque par injection de neutralisation à l'équipement utilisateur (202, 316, 318, 406, 506),
- où l'attaque par injection de neutralisation correspond à un message de rejet, et
- où le message de rejet imite un message de rejet que la station de base (204, 404, 504) enverrait.

9. Méthode (100, 200) pour une neutralisation d'une connexion dans un réseau de télécommunication, la méthode comprenant :

10. Méthode (100, 200) selon la revendication précédente,
où l'un ou plusieurs nœuds comprend au moins une station de base (204, 404, 504) ou un équipement utilisateur (202, 316, 318, 406, 506).

11. Méthode (100, 200) selon la revendication 9 ou 10,
où évaluer une admissibilité basée sur les caractéristiques de signal mesurées comprend comparer les caractéristiques de signal mesurées pour le signal reçu de l'un ou plusieurs nœuds (204, 404, 504, 202, 316, 318, 406, 506) avec au moins un seuil.

12. Méthode (100, 200) selon l'une des revendications 9 à 11,
- où recevoir un signal d'au moins un nœud (204, 404, 504, 202, 316, 318, 406, 506) du réseau de télécommunication comprend recevoir un signal d'un équipement utilisateur (202, 316, 318, 406, 506) par une pluralité de récepteurs,
- où mesurer des caractéristiques de signal comprend mesurer des caractéristiques de signal pour le signal tel que reçu de l'équipement utilisateur (202, 316, 318, 406, 506) par chaque récepteur de la pluralité de récepteurs, et
- où évaluer une admissibilité basée sur les caractéristiques de signal mesurées comprend comparer les caractéristiques de signal mesurées du même type les unes avec les autres et / ou avec un ou plusieurs seuils.

13. Méthode (100, 200) selon l'une des revendications 9 à 12,
- où évaluer une admissibilité basée sur les caractéristiques de signal mesurées comprend
- estimer un indice de confiance basé sur les caractéristiques de signal mesurées, en particulier basé sur une comparaison des caractéristiques de signal mesurées selon la revendication 12 ou la revendication 13,
- comparer l'indice de confiance estimé avec au moins une valeur de référence et
- fournir un résultat d'admissibilité positif ou un résultat d'admissibilité négatif basé sur la comparaison de l'indice de confiance estimé avec l'une ou plusieurs valeurs de référence.

14. Méthode (100, 200) selon l'une des revendications 9 à 13,
- où le signal de l'un ou plusieurs nœuds (204, 404, 504, 202, 316, 318, 406, 506) est reçu à proximité d'une zone prédéterminée (314) ou dans la zone prédéterminée (314), et
- où évaluer une admissibilité basée sur les caractéristiques de signal mesurées comprend prendre en compte les limites (312) de la zone prédéterminée (314).

15. Méthode (100, 200) selon l'une des revendications 9 à 14,
où l'attaque par injection de neutralisation correspond à un déclencheur pour la station de base (204, 404, 504) pour rejeter une connexion de communication existante de l'équipement utilisateur (202, 316, 318, 406, 506) avec la station de base (204, 404, 504).

16. Méthode (100, 200) selon l'une des revendications 9 à 15,
- où la connexion de communication avec l'un ou plusieurs nœuds (204, 404, 504, 202, 316, 318, 406, 506) dans le réseau de télécommunication est une connexion de communication entre un équipement utilisateur (202, 316, 318, 406, 506) et une station de base (204, 404, 504),
- où transmettre une attaque par injection de neutralisation comprend transmettre un signal comprenant l'attaque par injection de neutralisation à l'équipement utilisateur (202, 316, 318, 406, 506),
- où l'attaque par injection de neutralisation correspond à un message de rejet, et
- où le message de rejet imite un message de rejet que la station de base (204, 404, 504) enverrait.
